# EUROPÄISCHE PATENTSCHRIFT

(11) **EP 2 539 180 B1**
(45) Veröffentlichungstag und Bekanntmachung des Hinweises auf die Patenterteilung: **26.02.2014**
(21) Anmeldenummer: 10795238.4
(22) Anmeldetag: 10.12.2010
(51) Int. Cl.: B60R 1/04, B60R 1/12, B60K 35/00

(54) **HALTEEINRICHTUNG ZUR HALTERUNG EINES INNENSPIEGELMODULS AN EINER WINDSCHUTZSCHEIBE**
FIXATION DEVICE FOR RETAINING AN INTERNAL MIRROR MODULE ON A WINDSCREEN
FIXATION POUR FIXER UN MODULE DE MIROIR INTÉRIEUR SUR UN PARE-BRISE

(30) Priorität: 25.02.2010 DE 102010009246
(43) Veröffentlichungstag der Anmeldung: 02.01.2013
(73) Patentinhaber: Daimler AG, 70327 Stuttgart (DE)
(72) Erfinder: FLEMMING, André, 71116 Gärtringen (DE); KRUG, Martin, 76189 Karlsruhe (DE); RITSCHEL, Ulf, 75378 Bad Liebenzell (DE); SCHMIDT, Axel, 70794 Filderstadt (DE)
(74) Vertreter: JENSEN & SON
(86) Internationale Anmeldenummer: PCT/EP2010/007557
(87) Internationale Veröffentlichungsnummer: WO 2011/103901

(56) Entgegenhaltungen:
- WO-A1-2009/007429
- DE-A1-102006 009 318
- GB-A- 437 475
- US-A- 3 554 582
- US-A- 6 087 953
- US-A1- 2007 265 755
- US-A1- 2007 297 075

## Beschreibung

Die Erfindung betrifft eine Halteeinrichtung zur Halterung eines Innenspiegelmoduls an einer Windschutzscheibe eines Kraftwagens.

Die DE 102 11 444 B4 offenbart eine Halterung zum Befestigen wenigstens eines Bauteils an einer Glasscheibe, insbesondere eines Fahrzeugs, mit einer Unterseite, mit der die Halterung mittels einer Verklebung an die Glasscheibe anklebbar ist. Zudem umfasst die Halterung eine Oberseite, an der Halteelemente ausgebildet sind, mit denen das Bauteil oder die Bauteile an der Halterung befestigbar ist/sind. Die Halterung ist dabei aus mit Glasfasern verstärktem Kunststoff hergestellt, wobei an der Unterseite ein Kanalsystem ausgebildet und/oder die Unterseite durch wenigstens eine Dehnungsfuge unterbrochen ist.

Die gattungsgemäße DE 10 2006 009 318 A1 offenbart eine Halteeinrichtung zur Halterung eines Innenspiegelmoduls an einer Windschutzscheibe eines Kraftwagens, mit einer an der Windschutzscheibe befestigbaren Grundplatte und mit zumindest einem an der Grundplatte zu haltenden Gehäuse, in welchem wenigstens eine Komponente, insbesondere eine Kamera, zumindest bereichsweise aufnehmbar ist, wobei das Innenspiegelmodul an der Grundplatte über ein Halteteil zu halten ist. Das Halteteil umfasst dabei eine Aufnahme für einen Spiegelfuß und ist neben dem Gehäuse an der Platte angeordnet.

Aus der US 2007/0265755 A1 ist eine Halteeinrichtung zur Halterung eines Innenspiegels an einer Windschutzscheibe eines Kraftwagens bekannt. Die Halteeinrichtung umfasst ein Gehäuse, über welches der Innenspiegel an der Windschutzscheibe befestigbar ist.

Der US 2007/0297075 A1 ist eine Halteeinrichtung zu Halterung eines Innenspiegels an einer Windschutzscheibe eines Kraftwagens als bekannt zu entnehmen. Der Innenspiegel ist dabei über ein an der Windschutzscheibe befestigtes Halteteil und ein an dem Halteteil befestigtes Verlängerungselement an der Windschutzscheibe gehalten.

Auch die GB 437 475 A offenbar eine Halteeinrichtung zur Halterung eines Innenspiegels an einer Windschutzscheibe, wobei der Innenspiegel über ein korrespondierendes Halteelement an der Windschutzscheibe zu haltern ist.

Ferner ist der US 6,087,953 A eine Haltereinrichtung zur Halterung eines Innenspiegels an einer Windschutzscheibe als bekannt zu entnehmen. Die Halteeinrichtung umfasst ein an der Windschutzscheibe befestigbares Grundelement, über welches der Innenspiegel an der Windschutzscheibe befestigbar ist.

Weiterhin ist eine Haltereinrichtung zur Halterung eines Innenspiegels an einer Windschutzscheibe aus der US 3 554 582 A bekannt. Dabei ist der Innenspiegel über ein an der Windschutzscheibe befestigbares Halteelement an der Windschutzscheibe zu haltern.

Schließlich offenbart die WO 2009/007429 A1 eine Vorrichtung zur Aufnahme von Fahrzeugsensoren in einem Fahrzeug, welche eine Gehäuse und mindestens eine Halterung für mobile Endgeräte umfasst. Die Halterung ist derart ausgelegt, dass die mobilen Endgeräte über die Halterung an dem Gehäuse über eine lösbare Befestigung angebracht werden.

Es ist Aufgabe der vorliegenden Erfindung, eine Halteeinrichtung zur Halterung eines Innenspiegelmoduls an einer Windschutzscheibe bereitzustellen, welche einen zur Verfügung stehenden Bauraum effizient ausnutzen.

Diese Aufgabe wird durch eine Halteeinrichtung zur Halterung eines Innenspiegelmoduls an einer Windschutzscheibe mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Eine solche Halteeinrichtung zur Halterung eines Innenspiegelmoduls an einer Windschutzscheibe eines Kraftwagens umfasst eine an der Windschutzscheibe befestigbare Grundplatte sowie zumindest ein an der Grundplatte zu haltendes Gehäuse, in welchem wenigstens eine Komponente, insbesondere eine Kamera, zumindest bereichsweise aufnehmbar ist. Das Innenspiegelmodul ist dabei an der Grundplatte über ein Halteteil zu halten.

Erfindungsgemäß ist vorgesehen, dass das Halteteil unter Umgehung des zumindest einen Gehäuses unmittelbar an der Grundplatte zu halten ist.

Die erfindungsgemäße Halteeinrichtung schafft damit ein optimiertes Verhältnis eines zur Verfügung stehenden Bauraumes zu einem hohen Funktionserfüllungsumfang durch Komponenten im Bereich des Innenspiegelmoduls, so zum Beispiel durch die in dem Gehäuse zumindest bereichsweise aufgenommene Komponente, durch das Innenspiegelmodul sowie gegebenenfalls durch weitere Komponenten wie beispielsweise Lichtsensoren, Regensensoren und/oder dergleichen. Mit anderen Worten bedeutet dies, dass die Halteeinrichtung eine sehr effiziente Ausnutzung des zur Verfügung stehenden Bauraums ermöglicht, ohne, dass ein Innenspiegel des Innenspiegelmoduls, mittels welchem ein Fahrer des Kraftwagens einen Heckbereich desselbigen einsehen kann, in eine des selbigen in Fahrzeuglängsrichtung ungünstige Position, beispielsweise am Dachrahmen, montiert werden muss. Das Innenspiegelmodul sowie der Innenspiegel können somit im Bereich der Windschutzscheibe verbleiben, wodurch insbesondere am Dachrahmen Bauraum geschaffen ist, beispielsweise für eine Bedieneinheit für ein Schiebedach und/oder dergleichen.

Bei einer vorteilhaften Ausführungsform der Erfindung ist das Halteteil unter Ausbildung zumindest eines Zwischenraums zwischen dem Halteteil und der Grundplatte an der Grundplatte zu halten, wobei das Halteteil beispielsweise wenigstens bereichsweise einen zumindest im Wesentlichen einen U-förmigen Querschnitt aufweist. Dabei ist der Zwischenraum zumindest bereichsweise durch Schenkel der U-Form gebildet, wobei das Gehäuse zumindest bereichsweise in dem Zwischenraum anordenbar ist. Das bedeutet also, dass das Halteteil das Gehäuse zumindest bereichsweise umgibt und umgreift, woraus eine besonders effiziente Ausnutzung des zur Verfügung stehenden Bauraums resultiert. Durch die Ausgestaltung des Halteteils in Form einer U-förmigen, C-förmigen oder dergleichen Brücke ist keine große zusammenhängende Fläche an der Windschutzscheibe zur Befestigung des Innenspiegelmoduls notwendig. Vielmehr kann der so geschaffene Platz für die Anordnung des Gehäuses und damit zur Steigerung des Funktionserfüllungsumfangs genutzt werden.

Durch die erfindungsgemäße Ausgestaltung des Halteteils, durch welche eine Art Drei-Punkt-Lagerung des Halteteils an der Grundplatte geschaffen ist, weist die Halteeinrichtung eine hohe Stabilität und damit eine geringe Zitterneigung des Innenspiegelmoduls und damit des Innenspiegels auf, was aus einem großen Hebelarm zwischen Haltepunkten des Halteteils an der Grundplatte resultiert. Diese geringe Zitterneigung gewährleistet eine gute und ungestörte Darstellung des Heckbereichs des Kraftwagens beim Blick des Fahrers in den Innenspiegel. Dies geht einher mit einer erhöhten Sicherheit, da der Fahrer somit stets klar den Heckbereich und Vorgänge in diesem insbesondere im Straßenverkehr erkennen kann.

An dieser Stelle sei angemerkt, dass die Grundplatte beispielsweise mit einer entsprechenden Seite an der Windschutzscheibe anklebbar ist. Zusätzliche oder alternative Befestigungsarten sind aber ohne Weiteres möglich.

Bei einer besonders vorteilhaften Ausführungsform der Erfindung ist das Gehäuse im Wesentlichen U-förmig ausgebildet. Diese birgt den Vorteil, dass dadurch das Halteteil das Gehäuse besonders günstig umgehen, insbesondere auf einer von der Windschutzscheibe abgewandten Seite des Gehäuses umgreifen kann. Außerdem weist das Gehäuse dadurch ein großes Innenvolumen, also einen großen Aufnahmeraum auf, der viel Platz für die Unterbringung von Komponenten wie beispielsweise einer Stereo-Kamera bietet. Zur für den Fahrer sehr guten Positionierung des Innenspiegelmoduls und des Innenspiegels überdeckt das Halteteil vorteilhafterweise das Gehäuse auf einer der Windschutzscheibe gegenüberliegenden Seite des Gehäuses, wodurch der Innenspiegel in Fahrzeuglängsrichtung trotz der dortigen Anordnung des Gehäuses relativ weit vorne positioniert werden kann, um damit auch Platz für in Fahrzeuglängsrichtung in Richtung des Heckbereichs des Fahrzeugs dahinterliegende Bedienelemente, beispielsweise für das Schiebedach, zu schaffen.

Ist die Grundplatte beispielsweise zumindest im Wesentlichen aus Kunststoff ausgebildet, birgt dies den Vorteil, dass dadurch Halteelemente zur Halterung des Halteteils an der Grundplatte bei deren Herstellung, beispielsweise mittels eines Spritzgießverfahrens, angeformt werden können. Dies hält die Teilanzahl und damit die Kosten für die Grundplatte und somit für die gesamte Halteeinrichtung in einem geringen Rahmen. Ebenso möglich ist, die Grundplatte als Hybridbauteil auszubilden, wobei zumindest zwei voneinander unterschiedliche Werkstoffe vorgesehen sind. Dabei kann die Grundplatte beispielsweise zumindest im Wesentlichen aus einem metallischen Werkstoff gebildet sein, während die Halteelemente zur Halterung des Halteteils beispielsweise aus Kunststoff ausgebildet und an den metallischen Werkstoff angespritzt sind.

Das Halteteil ist beispielsweise zumindest im Wesentlichen aus Aluminium und als Aluminium-Druckgussteil ausgebildet, was einerseits die Darstellung komplexer Geometrien auf kostengünstige Art und Weise erlaubt. Andererseits weist dadurch das Halteteil eine hohe Steifigkeit auf, was die Zitterneigung weiter reduziert. Ebenso möglich ist, das Halteteil zumindest im Wesentlichen aus Kunststoff auszubilden und mit Einlegeteilen, beispielsweise aus Stahl, zu verstärken, zur Realisierung einer hohen Steifigkeit und damit einer geringen Zitterneigung.

Zur Befestigung des Innenspiegelmoduls und des Innenspiegels an dem Halteteil kann vorgesehen sein, dass das Halteteil zumindest im Wesentlichen auf einer der Windschutzscheibe gegenüberliegenden Seite zumindest ein Befestigungselement, insbesondere ein Lager, für einen Spiegelfuß aufweist, an welchem das Innenspiegelmodul mit Innenspiegel zu befestigen ist. Ebenso möglich ist, dass der Spiegelfuß in das Halteteil integriert ist, wobei also der Spiegelfuß zur Befestigung bzw. Lagerung des Innenspiegelmoduls einstückig mit dem Halteteil ausgebildet ist.

Ebenso erlaubt die erfindungsgemäße Halteeinrichtung eine äußerst einfache, zeit- und damit kostengünstige Montage und Demontage des Innenspiegelmoduls auch in komplexen Bauräumen, was die Kosten für die Halteeinrichtung weiterhin gering hält.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:
- Fig. 1: eine perspektivische Ansicht sowie eine Seitenansicht einer Halteeinrichtung, mittels welcher ein Innenspiegelmodul an einer Windschutzscheibe eines Kraftwagens gehalten ist;
- Fig. 2: eine Unteransicht eines Gehäuses der Halteeinrichtung gemäß Fig. 1, in welchem eine Stereo-Kamera aufgenommen ist;
- Fig. 3A: eine Unteransicht des Gehäuses gemäß Fig. 2 sowie eines Halteteils der Halteeinrichtung gemäß Fig. 1, an welchem das Innenspiegelmodul gehalten ist;
- Fig. 3B: eine Unteransicht der Halteeinrichtung gemäß Fig. 1 ohne das Innenspiegelmodul;
- Fig. 4: zwei Seitenansichten einer Grundplatte, des Halteteils sowie eines Spiegelfußes der Halteeinrichtung gemäß Fig. 1, wobei der Spiegelfuß über das Halteteil an der Grundplatte gehalten ist;
- Fig. 5: eine perspektivische Ansicht der Grundplatte, des Halteteils sowie des Spiegelfußes gemäß Fig. 4;
- Fig. 6: eine perspektivische Ansicht sowie jeweils ausschnittsweise drei perspektivische Ansichten des Halteteils gemäß den vorhergehenden Figuren;
- Fig. 7: eine Rückansicht des an dem Halteteil gehaltenen Spiegelfußes gemäß den vorhergehenden Figuren sowie eine perspektivische Ansicht des Spiegelfußes und ausschnittsweise eine Darstellung eines Befestigungselements zur Befestigung des Spiegelfußes an dem Halteteil;
- Fig. 8: eine perspektivische Ansicht sowie eine Unteransicht des Gehäuses der Halteeinrichtung gemäß den vorhergehenden Figuren;
- Fig. 9: eine perspektivische Ansicht der Halteeinrichtung gemäß den vorhergehenden Figuren ohne Innenspiegelmodul; und
- Fig. 10: jeweils ausschnittsweise perspektivische Ansichten des an der Grundplatte gehaltenen Halteteils der Halteeinrichtung gemäß den vorhergehenden Figuren.

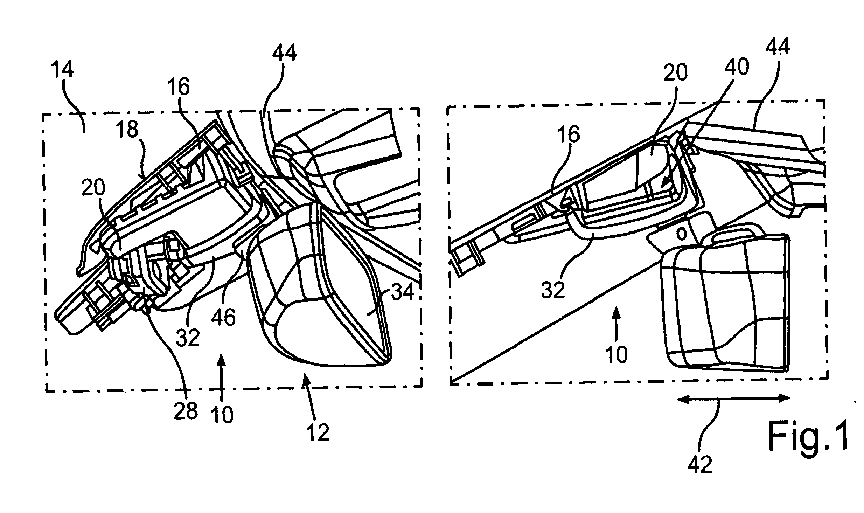

Die Fig. 1 zeigt eine Halteeinrichtung 10 zur Halterung eines Innenspiegelmoduls 12 an einer Windschutzscheibe 14 eines Kraftwagens. Die Halteeinrichtung 10 umfasst eine Grundplatte 16, welche mit einer Seite 18 der Grundplatte 10 an der Windschutzscheibe 14 angeklebt ist.

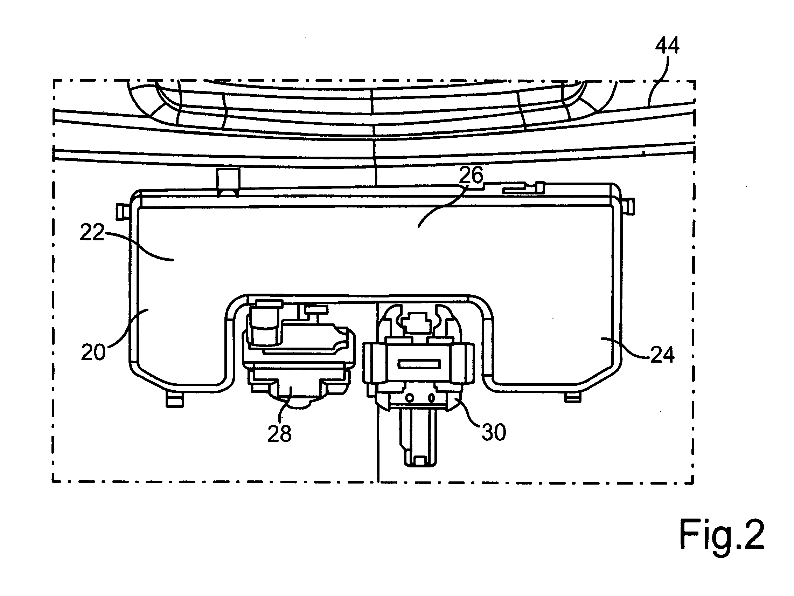

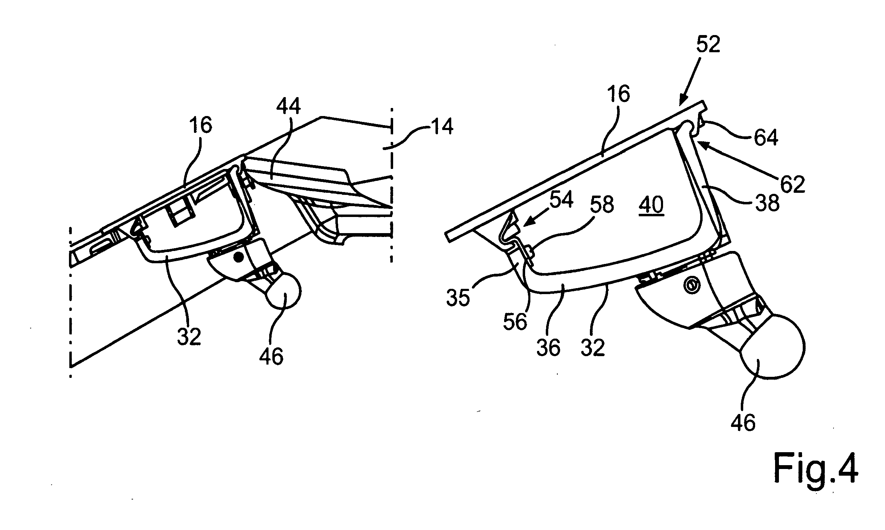

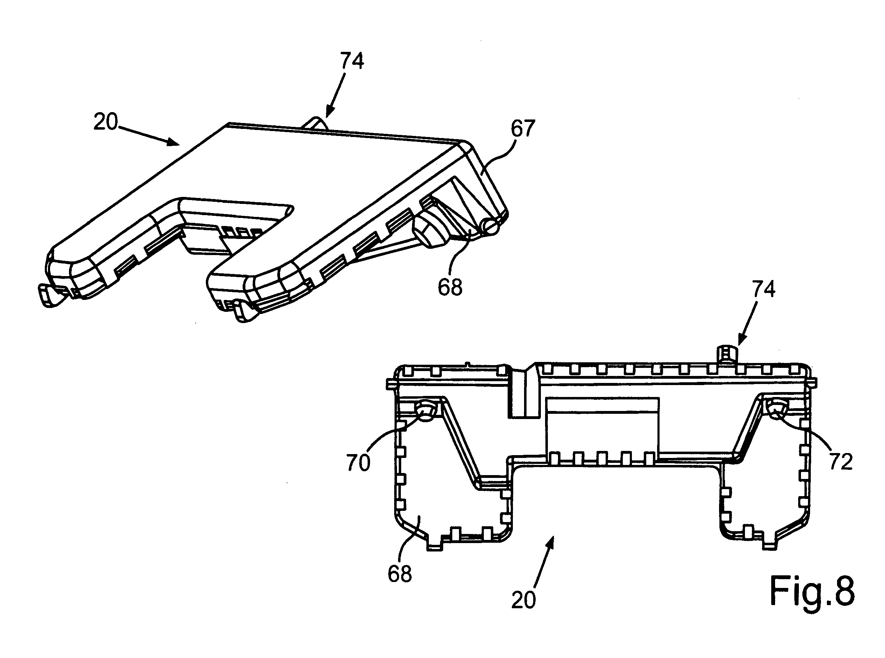

An der Grundplatte 16 ist ein im Wesentlichen U-förmiges Gehäuse 20 gehalten, in welchem eine Stereo-Kamera mit zwei Objektiven 70 und 72 (Fig. 8) aufgenommen ist. Wie der Fig. 2 zu entnehmen ist, ist das U-förmige Gehäuse 20 durch einen ersten Schenkel 22, einen zweiten Schenkel 24 sowie einen dritten Schenkel 26 zur Darstellung der U-Form gebildet. In dem durch die Schenkel 22, 24, 26 gebildeten Zwischenraum der U-Form sind eine Nachtsichtkamera 28 sowie ein Regen-Licht-Sensor 30 angeordnet. Diese Ausgestaltung des Gehäuses 20 sowie die Anordnung der Nachtsichtkamera 38 und des Regen-Licht-Sensors 30 stellt eine sehr gute Ausnutzung eines zur Verfügung stehenden Bauraums dar. Um den zur Verfügung stehenden Bauraum noch besser auszunutzen umfasst die Halteeinrichtung 10 ein Halteteil 32, über welches das lnnenspiegelmodul 12 mit einem Innenspiegel 34 an der Grundplatte 16 und damit an der Windschutzscheibe 14 gehalten ist. Das Halteteil 32 weist einen im Wesentlichen U-förmigen Querschnitt auf, welcher durch Schenkel 35, 36 und 38 (Fig. 4) gebildet ist. Durch diesen U-förmigen Querschnitt ist das Halteteil 32 unter Ausbildung eines Zwischenraums 40 (Fig. 4) an der Grundplatte 16 gehalten, wobei das Gehäuse 20 bereichsweise innerhalb des Zwischenraums 40 angeordnet ist. Mit anderen Worten bedeutet dies, dass das Halteteil 32 das Gehäuse 20 auf einer der Windschutzscheibe 14 gegenüberliegenden Seite des Gehäuses 20 das Gehäuse 20 auf dieser Seite sowie auf weiteren, von der Windschutzscheibe 14 abgewandten Seiten überdeckt und somit das Gehäuse 20 umgreift, wodurch das Halteteil 32 unter Umgehung des Gehäuses 20 an der Grundplatte 16 gehalten ist.

Die Halteeinrichtung 10 gewährleistet eine optimale Positionierung des Innenspiegelmoduls 12 insbesondere in Fahrzeuglängsrichtung gemäß einem Richtungspfeil 42. Trotz des sehr hohen Funktionserfüllungsumfangs im Bereich der Halteeinrichtung 10 durch die Stereo-Kamera, den Regen-Licht-Sensor 30, die Nachtsichtkamera 28 und gegebenenfalls weiterer Komponenten kann das Innenspiegelmodul 12 durch die Halteeinrichtung 10 weiterhin im Bereich der Windschutzscheibe 14 an dieser zumindest mittelbar befestigt werden und muss nicht an einem in Fahrzeuglängsrichtung gemäß dem Richtungspfeil 42 in Richtung eines Heckbereichs des Kraftwagens hinter der Halteeinrichtung 10 liegenden Dachrahmens 44 gehalten werden. Dies schafft Bauraum für Bedienelemente für ein Schiebedach. Zudem ermöglicht das einen sehr guten Blick des Fahrers des Kraftwagens in den Innenspiegel 34.

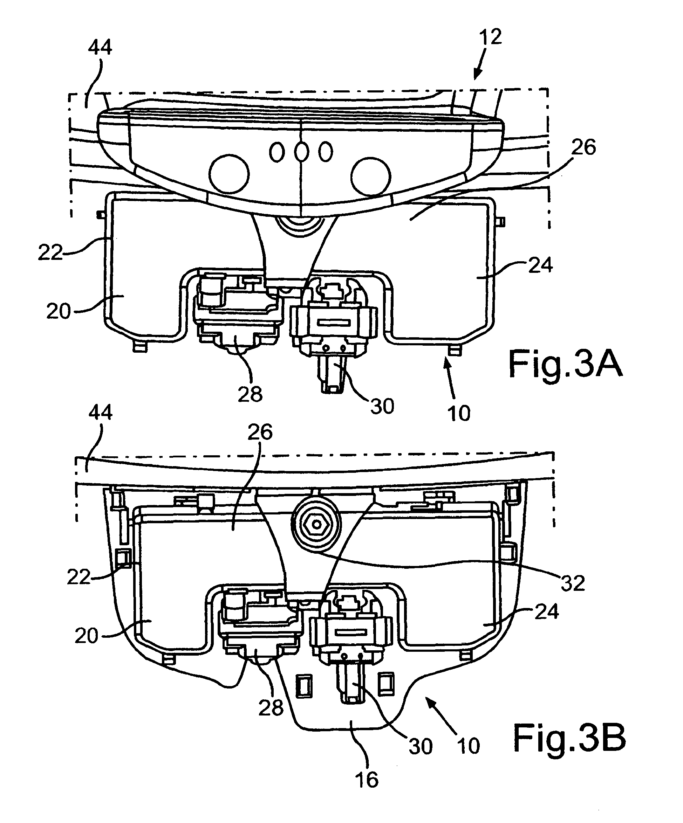

Die ausgeführte Halterung des Halteteils 32 an der Grundplatte 16 unter Umgehung des Gehäuses 20 ist insbesondere der Fig. 3B zu entnehmen. Die Fig. 3A zeigt die sehr vorteilhafte Positionierung des Innenspiegelmoduls 12 in Fahrzeuglängsrichtung.

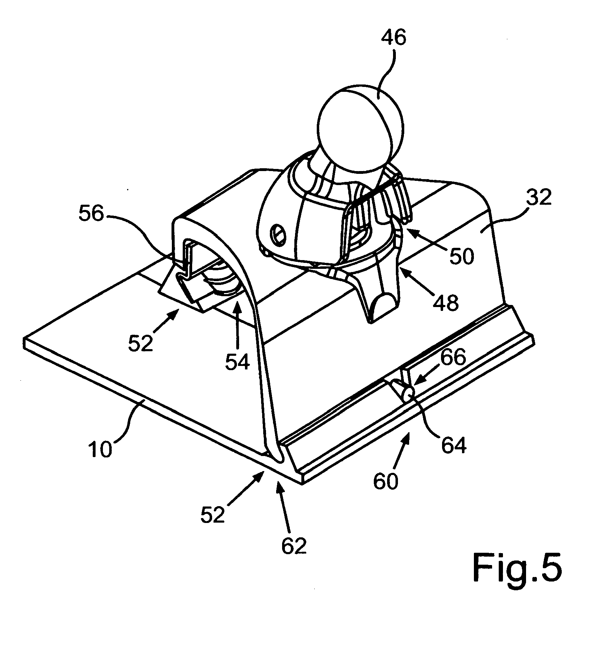

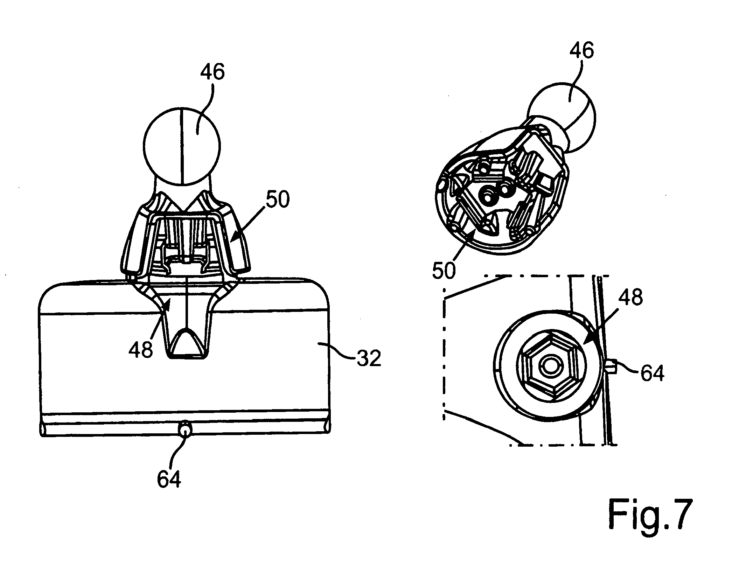

Das Innenspiegelmodul 12 ist über einen Spiegelfuß 46 an dem Halteteil 32 gehalten, was insbesondere den Figuren 4, 5 und 7 zu entnehmen ist. Zur Befestigung des Spiegelfußes 46 an dem Halteteil 32 weist das Halteteil 32 auf einer im Wesentlichen der Windschutzscheibe 14 gegenüberliegenden Seite Befestigungselemente 48 auf, die zu Befestigungselementen 50 des Spiegelfußes 46 korrespondieren.

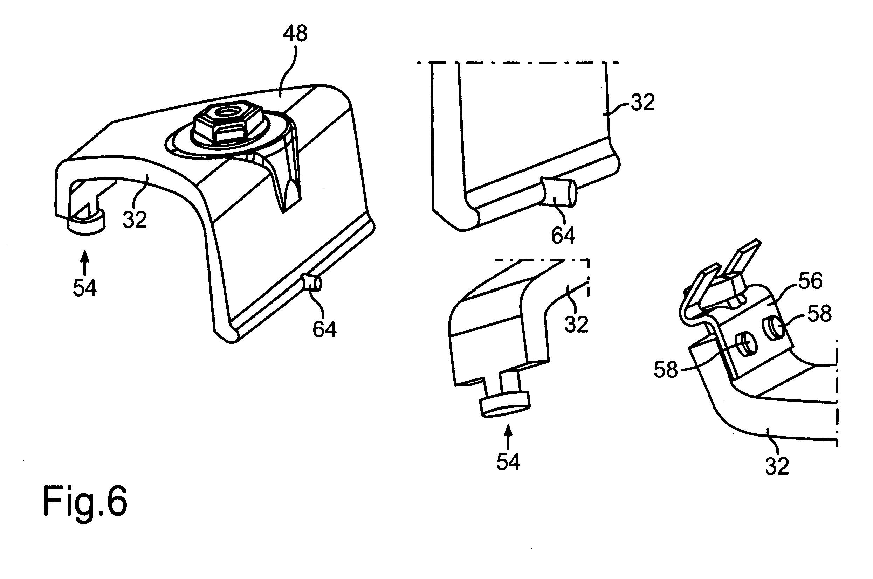

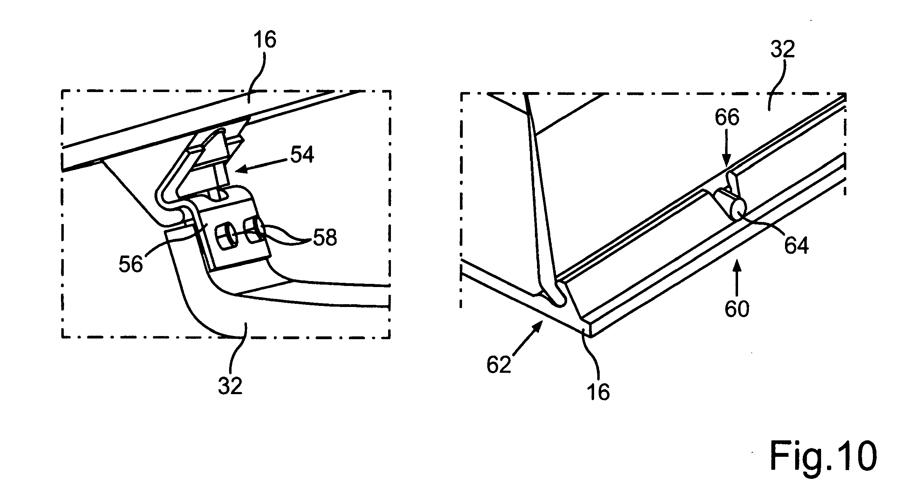

Wie insbesondere den Fig. 4, 5, 6 und 10 zu entnehmen ist, ist das Halteteil 32 über eine Schnappverbindung 52 an der Grundplatte 16 gehalten. Eine Schraubverbindung ist jedoch ebenso möglich. Dadurch, dass das Halteteil 32 über einen Lagerzapfen 54 an der Grundplatte 16 abgestützt ist, wodurch eine konische Punktauflage dargestellt ist, ist eine Art Drei-Punkt-Lagerung des Halteteils 32 an der Grundplatte 16 geschaffen, wodurch die Halteeinrichtung 10 eine sehr geringe Zitterneigung aufweist. Ein Zittern des Innenspiegelmoduls 12 und insbesondere des Innenspiegels 34 ist dadurch deutlich reduziert oder gar vermieden, was dem Fahrer einen besonders klaren und deutlichen Blick in den Innenspiegel 34 ermöglicht. Zur weiteren Verbesserung des Schwingungsverhaltens der Halteeinrichtung 10 und damit zur Vermeidung eines Zitterns des Innenspiegelmoduls 12 ist das Halteteil 32 beispielsweise als Aluminium-Druckgussteil ausgebildet. Außerdem ist das Halteteil 32 über ein Federelement 56 an der Grundplatte 16 gehalten, welches einerseits durch Schrauben 58 mit dem Halteteil 32 und andererseits über die Schnappverbindung 52 mit der Grundplatte 16 verbunden ist.

Darüber hinaus sind eine Zentrierungseinrichtung 60 sowie ein Gleitlager 62 vorgesehen, über welche das Halteteil 32 an der Grundplatte 16 gehalten ist. Die Zentrierungseinrichtung 60 umfasst dabei einen halteteilseitigen Zapfen 64, der mit einer Aufnahme 66 zusammenwirkt. Die Aufnahme 66 ist dabei ausgehend von dem Spiegelfuß 46 in Richtung der Grundplatte 16 konisch ausgebildet, was ein Einführen des Zapfens 64 in die Aufnahme 66 erleichtert sowie eine Zentrierung des Halteteils 32 gewährleistet. Somit ist das in Spiegelmodul 12 in einer gewünschten Sollposition zeitund kostengünstig montierbar.

Die Fig. 8 zeigt das Gehäuse 20, welches eine erste Gehäuseschale 67 sowie eine zweite Gehäuseschale 68 umfasst. Die in dem Gehäuse 20 aufgenommene Stereo-Kamera weist zwei Objektive 70 und 72 auf. Zur Signalübertragung sind Anschlüsse 74 vorgesehen.

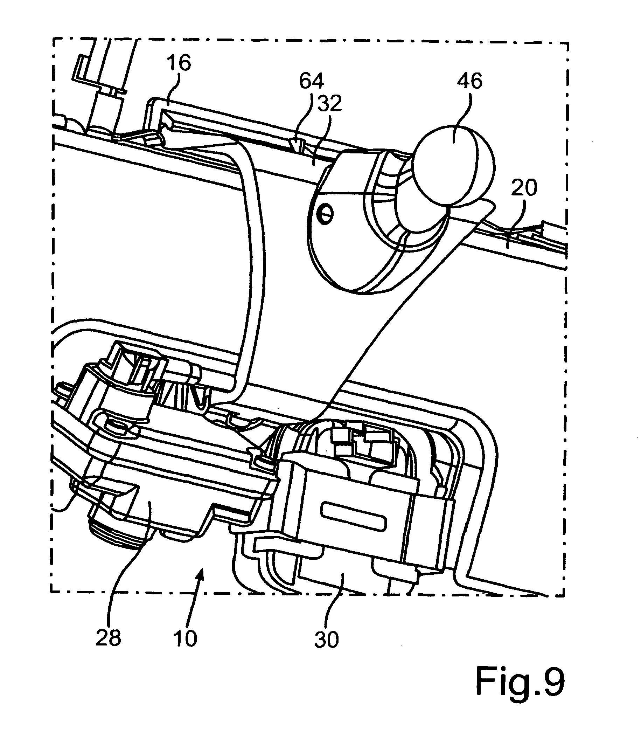

Die Fig. 9 verdeutlicht nochmals die optimale Bauraumausnutzung durch die Halteeinrichtung 10, wodurch in besonders geringem Bauraum ein besonders hoher Funktionserfüllungsumfang dargestellt wird. Dies ist ermöglicht durch die Umgreifung des Gehäuses 20 durch das Halteteil 32 und die räumliche Aufteilung der Elemente zur Halterung des Innenspiegelmoduls 12 sowie der übrigen Komponenten wie der Nachtsichtkamera 28 und des Regen-Licht-Sensors 30 Ein weiterer Vorteil ist, dass die Komponenten an der Windschutzscheibe 14 nicht im Blickfeld von Insassen des Kraftwagens liegen, was dem optischen Eindruck des Innenraums zugute kommt.

## Patentansprüche

1. Halteeinrichtung (10) zur Halterung eines Innenspiegelmoduls (12) an einer Windschutzscheibe (14) eines Kraftwagens, mit einer an der Windschutzscheibe (14) befestigbaren Grundplatte (16), und mit zumindest einem an der Grundplatte (16) zu haltenden Gehäuse (20), in welchem wenigstens eine Komponente, insbesondere eine Kamera, zumindest bereichsweise aufnehmbar ist, wobei das Innenspiegelmodul (12) an der Grundplatte (16) über ein Halteteil (32) zu halten ist,
**dadurch gekennzeichnet, dass**
das Halteteil (32) unter Umgehung des zumindest einen Gehäuses (20) unmittelbar an der Grundplatte (16) zu halten ist.

2. Halteeinrichtung (10) nach Anspruch 1,
**dadurch gekennzeichnet, dass**
das Halteteil (32) unter Ausbildung zumindest eines Zwischenraums (40) zwischen dem Halteteil (32) und der Grundplatte (16) an dieser zu halten ist.

3. Halteeinrichtung (10) nach einem der Ansprüche 1 oder 2,
**dadurch gekennzeichnet, dass**
das Halteteil (32) wenigstens bereichsweise einen zumindest im Wesentlichen U-förmigen Querschnitt aufweist.

4. Halteeinrichtung (10) nach einem der vorhergehenden Ansprüche,
**dadurch gekennzeichnet, dass**
das Halteteil (32) über eine Zentrierungseinrichtung (60) an der Grundplatte (16) zu halten ist.

5. Halteeinrichtung (10) nach Anspruch 4,
**dadurch gekennzeichnet, dass**
die Zentrierungseinrichtung (60) zumindest einen Zapfen (64) umfasst, welcher in einer korrespondierenden Aufnahme (66) der Zentrierungseinrichtung (60) aufnehmbar ist.

6. Halteeinrichtung (10) nach Anspruch 5,
**dadurch gekennzeichnet, dass**
der Zapfen (64) und/oder die Aufnahme (66) der Zentrierungseinrichtung (60) zumindest bereichsweise konisch ausgebildet ist.

7. Halteeinrichtung (10) nach einem der vorhergehenden Ansprüche,
**dadurch gekennzeichnet, dass**
das Halteteil (32) über zumindest ein Federelement (56) an der Grundplatte (16) zu halten ist.

8. Halteeinrichtung (10) nach einem der vorhergehenden Ansprüche,
**dadurch gekennzeichnet, dass**
das Halteteil (32) über zumindest eine Rastverbindung (52) an der Grundplatte (16) zu halten ist.

9. Halteeinrichtung (10) nach einem der vorhergehenden Ansprüche,
**dadurch gekennzeichnet, dass**
das Halteteil (32) zumindest im Wesentlichen als Aluminium-Druckgussteil oder als Kunststoffteil mit Einlegeteilen, insbesondere Stahleinlagen, ausgebildet ist.

10. Halteeinrichtung (10) nach einem der vorhergehenden Ansprüche,
**dadurch gekennzeichnet, dass**
das zumindest eine Gehäuse (20) im Wesentlichen U-förmig ausgebildet ist.

## Claims

1. Holding device (10) for retaining an interior mirror module (12) on a windscreen (14) of a motor vehicle, comprising a base plate (16) which can be secured to the windscreen (14), and further comprising at least one housing (20) to be held on the base plate (16), in which housing (20) at least one component, in particular a camera, can be at least partially accommodated, wherein the interior mirror module (12) is to be held on the base plate (16) via a retaining part (32),
**characterised in that**
the retaining part (32) is to be held directly on the base plate (16) while bypassing the at least one housing (20).

2. Holding device (10) according to claim 1,
**characterised in that**
the retaining part (32) is to be held on the base plate (16) while forming at least one gap (40) between the retaining part (32) and the base plate (16).

3. Holding device (10) according to claim 1 or 2,
**characterised in that**
at least some sections of the retaining part (32) have an at least substantially U-shaped cross-section.

4. Holding device (10) according to any of the preceding claims,
**characterised in that**
the retaining part (32) is to be held on the base plate (16) via a centring device (60).

5. Holding device (10) according to claim 4,
**characterised in that**
the centring device (60) includes at least one pin (64) which can be accommodated in a corresponding receptacle (66) of the centring device (60).

6. Holding device (10) according to claim 5,
**characterised in that**
at least some sections of the pin (64) and/or of the receptacle (66) of the centring device (60) are conical.

7. Holding device (10) according to any of the preceding claims,
**characterised in that**
the retaining part (32) is to be held on the base plate (16) via at least one spring element (56).

8. Holding device (10) according to any of the preceding claims,
**characterised in that**
the retaining part (32) is to be held on the base plate (16) via at least one latching connection (52).

9. Holding device (10) according to any of the preceding claims,
**characterised in that**
the retaining part (32) is at least substantially represented by an aluminium die-cast component or by a plastic component with inserts, in particular steel inserts.

10. Holding device (10) according to any of the preceding claims,
**characterised in that**
the at least one housing (20) is substantially U-shaped.

## Revendications

1. Dispositif de retenue (10) pour fixer un module de rétroviseur intérieur (12) sur le pare-brise (14) d'une automobile, ledit dispositif de retenue étant doté d'une plaque de base (16) pouvant être fixée sur le pare-brise (14) ainsi que d'au moins un boîtier (20) maintenu sur la plaque de base (16) et dans lequel au moins un élément, en particulier une caméra, peut être logé au moins par endroits, le module de rétroviseur intérieur (12) étant maintenu sur la plaque de base (16) par l'intermédiaire d'une partie de retenue (32), **caractérisé en ce que** la partie de retenue (32) est fixée directement sur la plaque de base (16), le au moins un boîtier (20) étant contourné.

2. Dispositif de retenue (10) selon la revendication 1, **caractérisé en ce que** la pièce de retenue (32) est fixée sur ladite plaque de base en formant au moins un espace intermédiaire (40) entre la partie de retenue (32) et la plaque de base (16).

3. Dispositif de retenue (10) selon l'une quelconque des revendications 1 à 2, **caractérisé en ce que** la partie de retenue (32) présente au moins par endroits au moins une section transversale en forme essentiellement de U.

4. Dispositif de retenue (10) selon l'une quelconque des revendications précédentes, **caractérisée en ce que** la partie de retenue (32) est fixée sur la plaque de base (16) au moyen d'un dispositif de centrage (60).

5. Dispositif de retenue (10) selon la revendication 4, **caractérisé en ce que** le dispositif de centrage (60) comprend au moins un goujon lequel peut être logé dans un logement approprié (66) du dispositif de centrage (60).

6. Dispositif de retenue (10) selon la revendication 5, **caractérisé en ce que** le goujon (64) et/ou le logement (66) du dispositif de centrage (60) est conique au moins par endroits.

7. Dispositif de retenue (10) selon l'une quelconque des revendications précédentes, **caractérisée en ce que** la partie de retenue (32) est fixée sur la plaque de base (16) au moyen d'au moins un élément de ressort (56).

8. Dispositif de retenue (10) selon l'une quelconque des revendications précédentes, **caractérisé en ce que** la partie de retenue (32) est fixée sur la plaque de base (16) au moyen d'au moins une liaison par encliquetage (52).

9. Dispositif de retenue (10) selon l'une quelconque des revendications précédentes, **caractérisé en ce que** la partie de retenue (32) est conçue au moins essentiellement en tant que pièce en aluminium coulée sous pression ou en tant que partie en matière plastique dotée de pièces d'insertion, en particulier de pièces rapportées en acier.

10. Dispositif de retenue (10) selon l'une quelconque des revendications précédentes, **caractérisé en ce que** l'au moins un boîtier (20) est essentiellement en forme de U.
